# EUROPEAN PATENT APPLICATION

(11) **EP 0 882 756 A2**
(43) Date of publication of application: **09.12.1998**
(21) Application number: 95200811.8
(22) Date of filing: 28.12.1990
(51) Int. Cl.: C08H 5/04, C09J 197/02, C08L 97/02

(54) **Thermosetting resin material and composite products from lignocellulose**

(62) Divisional of application: 90314424.4
(71) Applicant: K.C. SHEN TECHNOLOGY INTERNATIONAL LTD., Ottawa, Ontario K1J 8K1 (CA)
(72) Inventor: Shen, Kuo Chen, Ottawa, Ontario K1J 8K1 (CA)
(74) Representative: Seaborn, George Stephen

(57) **Abstract**

This invention relates to a process for converting lignocellulosic material into a thermosetting, waterproof adhesive and composite products. The lignocellulosic material is first treated with high pressure steam to cause a thermal decomposition and hydrolyzation of hemicellulose to generate water soluble, low molecular weight carbohydrates and other decomposition products. The lignocellulose residue is treated again with high pressure steam to cause a decomposition and hydrolyzation of cellulose to generate water soluble, low molecular weight carbohydrates and other decomposition products. These water solubles can be used alone or in admixture as a thermosetting resin adhesive to create a waterproof bond under heat and pressure. The thermosetting adhesive may also be used for bonding other components of the lignocellulosic material, or in combination with other lignocellulosic material or non lignocellulosic material to produce waterproof composite products.

## Description

### BACKGROUND OF THE INVENTION

In the applicant's European Patent No. 161 766 there is disclosed a process for making composite products from lignocellulosic material. This process involves first decomposing and hydrolyzing hemicellulose into water solubles of low molecular weight carbohydrates by subjecting the lignocellulosic material to high pressure steam and then utilizing those water solubles as a thermosetting adhesive to bond "in situ" the other components of the lignocellulosic material into a reconstituted composite product under heat and pressure. The water solubles act as both a bonding and a bulking agent to produce a composite product with good mechanical strength and superb dimensional stability. Thus, the process is superior in both economical and technological aspects to the conventional method, which require thermosetting synthetic resin adhesive, such as phenol and urea formaldehyde, for bonding.

The present invention relates to a process for extracting a thermosetting resin adhesive from lignocellulosic material and converting the lignocellulosic material to a composite product. This process is applicable to all lignocellulosic material of woody or non-woody nature. The thermosetting adhesive thus obtained has good adhesive properties for bonding lignocellulosic and non-lignocellulosic material to produce a waterproof bond.

First the hemicellulose of lignocellulosic material is decomposed and hydrolyzed by high pressure steam to produce low molecular weight water soluble resin material selected from the group consisting of pentose and hexose sugars, sugar polymers, furfural, dehydrated carbohydrates, organic acids and other decomposition products. These water solubles can be extracted and concentrated to be used as a thermosetting resin adhesive. Under heat and pressure these water soluble resin materials can be polymerized, crosslinked and thermoset to produce a waterproof bond which is resistant to boiling water.

The lignocellulosic residue, from which the water solubles have been extracted, is again treated with high temperature steam for the second time to cause thermal decomposition and hydrolyzation of cellulose into low molecular weight water solubles selected from the group consisting of hexose and pentose sugars, sugar polymers, hydroxymethyl furfural, furfural, organic acids and other decomposition products. These water solubles can be extracted and concentrated to be used, alone or mixed with water solubles extracted from hemicellulose hydrolyzation, as a thermosetting resin adhesive. Lignin also undergoes thermal decomposition and hydrolyzation during high pressure steam treatment to yield low molecular weight lignin and lignin products. Incidentally, water soluble resin material always contains a small portion of these lignin decomposition products.

In conventional methods for making composite products from lignocellulosic material thermosetting resin binders are required for bonding. The thermosetting resin binders are commonly synthesized from petrochemically based chemicals such as urea-formaldehyde and phenol-formaldehyde, which are the most common synthetic resins used in composite products from lignocellulosic material. Since these synthetic resin binders are derived from non-renewable petrochemicals they are becoming increasingly expensive as the natural sources are being depleted. The use of lignocellulosic material, which is renewable, as a feedstock for a thermosetting adhesive will therefore be highly attractive to manufacturers, since its use is technologically and economically superior to conventional methods.

The use of water soluble carbohydrates from the hemicellulose fraction of lignocellulosic material as adhesive first appeared in the 1930's after Mason patented his process, "Masonite" (US Patent Nos.1,578,609, 1,824,221 and 2,303,345), for making hardboard from wood chips. The Masonite process involves treating wood chips with high pressure steam to separate lignin out from the lignocellulosic material, to hydrolyze hemicellulose and to render it water soluble. At the end of steaming, the treated chips are discharged from the high pressure gun with an explosion which reduces chips into fibres and fibre bundles. The water solubles are eluted with water and separated out and the remaining fibres conataining cellulose and lignin are processed into hardboard. Masonite relies on the natural lignin for bonding.

The water solubles are processed separately as a by-product with a trade mark of "Masonoid." In U.S. Patent 2,224,135, issued to R. Boehm, "Masonoid", the water soluble by-product from hardboard manufacturing is used for making aldehydes, alcohols and organic acids. This patent also mentions that the water solubles thus obtained can be further concentrated and used as a water soluble adhesive. The use of "Masonoid" as a water soluble adhesive is also taught in US patents 2,643,953 and 2,716,613, issued to W. Schoel in 1949 and 1950 respectively. In these patents, it is stated that while these water solubles have adhesive properties, it has been found that they are not entirely satisfactory for use as an adhesive. One reason given is that these water solubles are undesirably hygrosocopic and therefore, the bond formed by them in adhesive application is somewhat unstable. Under high humidity the adhesive bond formed by these water solubles absorbs moisture from the air, thereby weakening the adhesive bond, whereas under low humidity, the adhesive bond formed by these water solubles loses moisture and weakens. Upon absorbing moisture, the adhesive bond formed by these water solubles tends to liquefy, while moisture loss tends to harden the bond so that it approaches a state of brittleness. (US Patent No. 2,643,953, Col.1, Lines 25-35).

Boehm and Schoel were not aware that these water solubles can be thermosetting in nature, if proper thermal decomposition and hydrolyzation of hemicellulose can be carried out, and are capable of being used as a water-proof adhesive. Instead, according to Boehm and Schoel patents, the "Masonoid" may be used only as a water-soluble adhesive. Since they did not recognize the bonding nature of the water soluble materials, their patents only teach the creation of a water-soluble adhesive bond. A water-soluble adhesive has only limited commercial application.

Boehm and Schoel's lack of appreciation that the water solubles from hemicellulose hydrolyzation are capable of being thermoset, if carried out according to the present invention, may be attributed to the logical development of the Masonite process. The Masonite process utilizes the natural lignin is as a binder, and not the water soluble materials, which are removed as "Masonoid" in the Masonite process. The removal of water solubles is a key feature of the Masonite process for making board products because the presence of these water solubles degrades the end product. It appears that either Boehm and Schoel did not realize that these water solubles were capable of being thermoset or that they did attempt to create a thermoset bond from the water solubles so obtained as a by-product from the Masonite process and found that such a waterproof bond was not possible. It is likely that the degree of thermal hydrolyzation in the Masonite process was not adequate to produce the necessary water solubles required to produce a thermosetting waterproof bond. As the present invention teaches, only a very specific combination of temperature and time, relating to a certain and specific lignocellulosic feedstock, will produce the required hydrolyzation and the resulting water solubles containing certain decomposition products required for the thermoset bond.

Carbohydrates have also been investigated in the past as co-reactants with phenolic resins as well as the sole ingredient in the adhesive. Meigs in US patents 1,593,342, 1,801,953 and 1,868,216 carried out some of the earliest work with phenol carbohydrates combinations. The reactions used both acid and basic catalysts and after, included reactions with aniline or aliphatic anions.

Chang and Kononenko (Adhesives Age, July 1962: 36-40) developed an adhesive system in which sucrose was reacted with phenol under alkaline conditions. The adhesive so obtained is claimed to be suitable for exterior plywood production. Gibbons and Wondolowski in US patent 4,048,127 produced a soluble liquid adhesive in which the carbohydrate-urea-phenol reaction product was neutralized and further reacted with formaldehyde to form an alkaline adhesive for plywood.

More recently, Stofko in US patents 4,107,370 and 4,183,997 and 4,375,194 proposed systems that used a variety of carbohydrate sources, including sucrose and starches, and an acidic catalyst as a waterproof adhesive for bonding lignocellulosic material. One of the patents also teaches using live steam under sealed press to transform the sugar-starch adhesive into a waterproof bond.

In contrast, the present invention utilizes the water solubles, which consist of pentose and hexose sugars, sugar polymers, furfural, dehydrated carbohydrates, organic acids, and other decomposition products, and which are extracted from hemicellulose and cellulose hydrolyzation of any lignocellulosic material. These extracted water solubles, along with a small portion of lignin decomposition products, without any chemical modification or catalyst, in concentrated form, can be used as a thermosetting waterproof resin adhesive for bonding lignocellulosic and non-lignocellulosic material. In addition the hydrolyzed lignocellulose can be further processed, utilizing the water solubles to bond and to bulk ,in situ, other components of the lignocellulose, or in combination with other lignocellulosic material, to produce a reconstituted composite product with good mechnical strength and superb dimensional stability.

Embodiments of the present invention will be described and illustrated in detail in the following examples:

### EXEMPLE 1

White spruce and Jack pine saw mill residues containing about 7% bark material and 16% moisture content were hammer milled to pass a 6.4mm (1/4 inch) screen and then were treated with various steam temperatures for different durations. A total of 15 batches of residues were treated at 4 different high pressure steams with temperatures ranging from 215 deg. C to 260 deg. C for a duration of 1/2 to 11 minutes. After steaming, the treated mill residue was washed with warm water and the elute was evaporated under vacuum to a concentration of about 50% solids as a liquid resin adhesive. The liquid resin adhesive was dark brown in colour with a pH ranging from about 2.8 to 4.3 The liquid resin had a low viscosity and made it easy to spray.

Poplar wafers (approximately 38 mm length, 0.7 mm thickness and 6 to 50 mm width) were sprayed with 6 % liquid adhesive (solids based on O.D. wafer weight). After spraying, the wafers were dried to a moisture content of about 3-5% before forming the mat. A total of 38 waferboards (60 x 60 x 1.11 cm) with a density of about 660 kg/m³ were made with one pressing condition (230 deg. C temperature, 12 minutes time and 35 kg/cm² closing pressure). Test results are summarized in the following Table 1. Canadian standard CAN-0437.0-M 86 is also included for comparison.

**TABLE 1**

| RESIN TREATMENT Temp & Time | BOARD DENSITY Kg/M³ | MOR (MPa) | | MOE (GPa) | IB (kPa) | THICKNESS SWELLING (%) |
|---|---|---|---|---|---|---|
| | | DRY | BOILED | | | |
| 260 deg C at | | | | | | |
| 1/2 min | 660 | 17.3 | 4.8 | 5.12 | 370 | 8.7 |
| 1 min | 650 | 21.6 | 9.5 | 5.84 | 430 | 3.5 |
| 1 1/2 | 670 | 22.3 | 12.4 | 5.88 | 485 | 2.6 |
| 245 deg C at | | | | | | |
| 1 min | 650 | 18.4 | 7.2 | 5.27 | 380 | 7.8 |
| 2 min | 670 | 19.6 | 9.4 | 5.17 | 480 | 4.2 |
| 3 min | 650 | 22.8 | 11.4 | 5.42 | 560 | 2.9 |
| 230 deg C at | | | | | | |
| 1 min | 660 | 18.2 | 0 | 4.27 | 130 | - |
| 3 min | 670 | 21.9 | 8.9 | 5.76 | 330 | 6.6 |
| 5 min | 660 | 23.4 | 8.8 | 5.62 | 555 | 6.3 |
| 7 min | 660 | 24.1 | 13.3 | 5.86 | 530 | 2.8 |
| 9 min | 660 | 23.4 | 11.6 | 5.58 | 555 | 2.7 |
| 215 deg C at | | | | | | |
| 5 min | 640 | 16.2 | 0 | 5.05 | 190 | - |
| 7 min | 630 | 19.8 | 0 | 5.11 | 300 | - |
| 9 min | 650 | 21.7 | 6.7 | 5.20 | 390 | 10.6 |
| 11 min | 650 | 22.4 | 9.8 | 5.46 | 580 | 5.3 |
| CSA STANDART | | | | | | |
| CAN3-0437.0-M 86 | | 17.2 | 8.6 | 3.10 | 345 | 25.0 |

### EXAMPLE 2

This example shows the particle size of the feed material and shape in relation to quality of the thermosetting resin adhesive produced. Fresh poplar chips with about 25% moisture content were divided into two equal parts A & B. However, chips of part B were hammer milled to pass a 6.4 mm screen before steam treatment. Both parts A & B were then treated with high pressure steam at 230 deg. C for 3 minutes. Liquid resin adhesive was extracted and concentrated separately from the treated poplar chips and particles. Two batches of 6 waferboards were fabricated with resin adhesives extracted from poplar wood A & B under identical conditions. The following Table 2 shows the test results which indicate that resin adhesive extracted from hammer milled poplar particles was better than that extracted from poplar chips of the same origins, and processed under the same manufacturing conditions.

**TABLE 2**

| Summary of waferboards bonded with 6% resin adhesives extracted from poplar chips and poplar particles | | | | | | |
|---|---|---|---|---|---|---|
| RESIN TREATMENT Temp & Time | BOARD DENSITY Kg/M³ | MOR (MPa) | | MOE (GPa) | IB (kPa) | THICKNESS SWELLING (%) |
| | | DRY | BOILED | | | |
| 230 deg C at 3 minutes | | | | | | |
| CHIPS | 650 | 19.8 | 8.7 | 5.30 | 445 | 4.2 |
| PARTICLES | 670 | 23.4 | 11.8 | 6.00 | 560 | 3.5 |

(Press temperature: 230 deg C, Press time: 10 min)

### EXAMPLE 3

This example demonstrates the use of tree bark for the extraction of resin adhesive. Fresh white pine bark with about 12% wood material containing about 53% moisture content was hammer milled to pass a 6.4 mm screen and was then treated with high pressure steam at 230 deg. C for 5 minutes. About 16% liquid solids resin by weight of O.D. bark was extracted from the steam treated bark and was concentrated to a liquid resin with 48% solids. The bark resin was dark brown in colour with a pH of 3.2. Three homogeneous particleboards with 8% resin solids were fabricated and hot pressed at 230 deg. C under a pressure of 40 kg/cm² for ten minutes. Test results are listed in Table 3.

**TABLE 3**

| RESIN TREATMENT Temp & Time | BOARD DENSITY Kg/M³ | MOR (MPa) | | MOE (GPa) | IB (kPa) | THICKNESS SWELLING (%) |
|---|---|---|---|---|---|---|
| | | DRY | BOILED | | | |
| 230 deg C for 5 min | 620 | 12.6 | 4.6 | 2.87 | 580 | 5.7 |
| | 670 | 15.2 | 6.8 | 3.37 | 720 | 4.4 |
| | 710 | 19.3 | 8.2 | 3.95 | 810 | 3.2 |

### EXAMPLE 4

This example demonstrates the extraction of resin adhesive from agricultural residue of sugarcane bagasse, a pulpy residue after sucrose was extracted from cane sugar production. The bagasse, containing about 14% moisture content was treated with high pressure steam at 220 deg. C for 7 min. About 12 % resin solids by weight of O.D. bagasse was extracted and concentrated to a liquid adhesive with a solids content of about 52%. Dried bagasse fibres were sprayed with 8% of the liquid adhesive and pressed at 230 deg. C for 10 minutes to form homogeneous particleboards (600 x 600 x 12.5 mm) with various board densities. Test results of 3 bagasse particleboards are summarized in the following Table 4.

**TABLE 4**

| Summary of bagasse particleboards bonded with 8% adhesive extracted from sugarcane bagasse. | | | | | | |
|---|---|---|---|---|---|---|
| RESIN TREATMENT Temp & Time | BOARD DENSITY Kg/M³ | MOR (MPa) | | MOE (GPa) | IB (kPa) | THICKNESS SWELLING (%) |
| | | DRY | BOILED | | | |
| 220 deg C for 7 min | 670 | 15.7 | 7.1 | 4.76 | 375 | 5.7 |
| | 730 | 19.3 | 9.6 | 5.12 | 460 | 5.2 |
| | 800 | 22.6 | 12.3 | 5.60 | 590 | 3.9 |

### EXAMPLE 5

This example illustrates the use of another agricultural by-product wheat straw, as raw material for the production of the thermosetting adhesive. Dry wheat straw was chopped to about 20 cm in length and then treated with high pressure steam at 240 deg. C for 2 minutes. About 14% water solubles by weight of straw was extracted and concentrated to about 49% solids as liquid adhesive.

Fine spruce particles of less than 2 mm were sprayed with 10% of the liquid adhesive. Larger particles, betwen 2 mm to 6 mm, were sprayed with 8% solids of the liquid adhesive. Three particleboards (600 x 600x 12.5 mm) of 3-layer construction were formed with fine particles in the surface layers and coarse particles in the core. All boards were targeted to a density of 770 kg/M³ and hot pressed at 230 deg. C for 8, 10 and 12 minutes respectively. Test results are summarized in the following Table 5.

**TABLE 5**

| PRESS TIME (min) | BOARD DENSITY Kg/M³ | MOR (MPa) | | MOE (GPa) | IB (kPa) | THICKNESS SWELLING (%) |
|---|---|---|---|---|---|---|
| | | DRY | BOILED | | | |
| 8 min | 770 | 18.2 | 0 | 3.26 | 280 | - |
| 10 min | 780 | 21.3 | 7.6 | 4.42 | 485 | 4.5 |
| 12 min | 780 | 22.6 | 9.7 | 5.16 | 620 | 3.6 |

### EXAMPLE 6

Fresh birch chips containing about 7% bark material and about 70% moisture content were treated with high pressure steam of 230 deg. C for 5 minutes. The chips were washed with water twice and squeezed to extracted as much elute as possible. The elute was evaporated under vacuum to a concentrate containing about 3% solids liquid adhesive which was then freeze dried to a solid state.of fine powder. This fine powdered resin adhesive was easy to handle and could be bagged and stored. Poplar wafers were first sprayed with 1% molten slack wax and followed with 4% resin powder. Three waterboards were made with the powdered adhesive at a press temperature of 230 deg. C under a pressure of 35 kg/cm² for three different press time of 8, 10, and 12 minutes. Test results of these 3 waferboards are listed in Table 6.

**TABLE 6**

| PRESS TIME | BOARD DENSITY Kg/M³ | MOR (MPa) | | MOE (GPa) | IB (kPa) | THICKNESS SWELLING (%) |
|---|---|---|---|---|---|---|
| | | DRY | BOILED | | | |
| 8 min | 660 | 16.2 | 0 | 4.78 | 390 | - |
| 10 min | 670 | 22.0 | 10.9 | 5.38 | 570 | 5.6 |
| 12 min | 660 | 22.8 | 11.0 | 5.61 | 630 | 3.7 |

### EXAMPLE 7

This example illustrates the use of low steam temperature in combination with an acid catalyst to hydrolyze the hemicellullose into water soluble carbohydrates resin material from mixture of aspen and spruce wood at about equal proportion by chip weight.

Fresh mixture of aspen and spruce chips were divided into two batches. One batch was soaked in a 0.4% solution of sulfuric acid for 24 hours and then steamed at 150 deg. C for 25 minutes. The other batch, without the addition of acid was further divided into 3 groups and each group was also steamed at 150 deg. C for 60, 120 and 180 minutes respectively. Water solubles were extracted from the two treated batches of aspen and spruce mixed chips and concentrated to about 46% solids as resin material. Before use for waferboard bonding, the liquid resin adhesive obtained from acid catalyzed chips was adjusted with sodium hydroxide to a pH level of 3.0. Twelve waferboards were fabricated with four resin adhesives derived from the two batches of chips. Resin content for all waferboard was 6%. Press temperature was 230 deg. C. for 12 minutes. Results are summmarized in the following Table 7.

**TABLE 7**

| STEAM TREATMENT | BOARD DENSITY Kg/M³ | MOR (MPa) | | MOE (GPa) | IB (kPa) | THICKNESS SWELLING (%) |
|---|---|---|---|---|---|---|
| | | DRY | BOILED | | | |
| Poplar chips treated at 150 deg C for | | | | | | |
| 40 min | 660 | 16.2 | 0 | 3.23 | 380 | - |
| 120 min | 650 | 19.3 | 4.8 | 3.76 | 430 | 10.8 |
| 180 min | 660 | 22.7 | 11.6 | 4.95 | 570 | 5.2 |
| Poplar chips with H₂SO₄ treated at | | | | | | |
| 150 C for 25 min | 660 | 23.4 | 12.8 | 516 | 590 | 3.2 |

### EXAMPLE 8

This example shows the extraction of water soluble resin material from previously hydrolyzed lignocellulosic material. This previously hydrolyzed lignocellulosic material consists maily cellulose and lignin products with a small portion of hemicellulose and water solubles.

The poplar particle residue processed in Example 2, after being treated with high pressure steam and after the water solubles from the hydrolyzed hemicellulose being extracted, was sprayed with a 0.4% sulfuric acid solution. The acid content of the residue was about 1.2% based on O.D. weight of the residue. The acid laden residue was steamed at 210 deg. C for 14 minutes to cause hydrolysis of the cellulose to yield water soluble resin material. About 32% water solubles by O.D. weight of the lignocellulose residue was obtained. The liquid resin was adjusted with soluble base of NaOH to a pH of 3.0 before being concentrated as liquid resin adhesive with a solids content of about 48%.

Three poplar waferboards were made with 6% spray of the liquid resin adhesive. Test results are summarized in the following Table 8.

**TABLE 8**

| PRESS TIME | BOARD DENSITY Kg/M³ | MOR (MPa) | | MOE (GPa) | IB (kPa) | THICKNESS SWELLING (%) |
|---|---|---|---|---|---|---|
| | | DRY | BOILED | | | |
| 230 deg c for | | | | | | |
| 8 min | 660 | 22.6 | 8.9 | 4.26 | 490 | 8.6 |
| 10 min | 650 | 23.3 | 11.2 | 5.33 | 555 | 5.2 |
| 12 min | 650 | 23.8 | 13.3 | 5.57 | 630 | 3.7 |

### EXAMPLE 9

This example illustrates the versatility of the process in that both thermosetting adhesive and composite panel products can be produced from the same lignocellulosic material after the steam treatment.

Green poplar chips were treated with high pressure steam at 245 deg. C for 90 seconds. After the steam treatment, about 6% water solubles by O.D/ weight of chips was extracted with hot water elute, concentrated to about 50% solids content and the resin adhesive was used for making waferboard. The residual chips were then mixed with 20% green poplar chips and refined with a disc refiner to produce fibres for manufacture of medium density fibreboard. No adhesive was added to the fibres as there was enough resin material remaining in the steam treated fibre material for bonding. Test results for waferboards and MDF are summarized in the following Table 9.

**TABLE 9**

| PRESS TIME | BOARD DENSITY Kg/M³ | MOR (MPa) | | MOE (GPa) | IB (kPa) | THICKNESS SWELLING (%) |
|---|---|---|---|---|---|---|
| | | DRY | BOILED | | | |
| WAFERBOARD - 6% Resin | | | | | | |
| 230 deg C | | | | | | |
| 12 min | 660 | 21.1 | 8.9 | 5.62 | 530 | 4.3 |

| MDF - 0% RESIN Addition | | | | | | |
|---|---|---|---|---|---|---|
| 230 deg C | | | | | | |
| 12 min | 800 | 22.6 | 11.8 | 4.96 | 650 | 5.7 |

### EXAMPLE 10.

This example shows the use of a mixture of water soluble resin material derived from hemicellulose and cellulose of poplar chips. The water soluble resin adhesives collected from Examples 2 and 8 were mixed at a ratio of 1:1 based on resin solids weight with acidity being adjusted to pH 2.7. Waferboards made with this mixed resin adhesives derived separately from hemicellulose and cellulose of poplar chips possessed very similar physical properties to those waferboards bonded with water soluble resin derived from hemicellulose and cellulose respectively. Test results are summarised in Table 10.

**TABLE 10**

| RESIN ORIGIN | BOARD DENSITY kg/M³ | MOR | | MOE (MPa) | IB (kPa) | THICK SWELL (%) | LINEAR EXPAN (%) |
|---|---|---|---|---|---|---|---|
| | | DRY (MPa) | BOILED | | | | |
| 6 % | 583 | 19.1 | 8.9 | 4.65 | 368 | 7.8 | 0.21 |
| Mixed | 648 | 23.4 | 12.6 | 5.88 | 516 | 6.5 | 0.22 |
| Resin | 711 | 30.5 | 16.5 | 6.43 | 724 | 6.0 | 0.19 |
| CSA Standard CAN3-0437.0-M86 | | 17.2 | 8.6 | 3.10 | 345 | 25.0 | 0.40 |

### EXAMPLE 11

This example demonstrates the advantage of the acidic nature of the resin material obtained from acid hydrolysis of hemicellulose and cellulose as shown in Examples 7 and 8. The highly acidic resin obtained from acid hydrolysis of poplar cellulose in Example 8 was mixed with resin material obtained from hydrolysis of poplar hemicellulose in Example 7. These two liquid resins were mixed to have a pH adjusted to 2.7. This mixed and highly acidic resin was used to make waferboard. Six waferboards (3 layer, 11.1mm thickness) were made with 40% by weight of 0.015'' (0.40 mm) thin wafers lended with 10% resin solids and 60% of 0.028" (0.71 mm) core wafers with 8% resin solids. Both face and core wafers contained 1% slack wax. Press temperature of 220 deg C. was used with press times of 5, 6, and 7 minutes. Test results are summarized in Table 11. It is evident that the highly acidic resin produced excellent waferboard but at a relaltively lower platen temperature and shorter press time.

**TABLE 11**

| PRESS TIME (Min) | BOARD DENSITY kg/M³ | MOR | | MOE (GPa) | IB (kPa) | THICKNESS SWELLING (%) |
|---|---|---|---|---|---|---|
| | | DRY (MPa) | BOILED | | | |
| 220 C | | | | | | |
| 5 | 657 | 29.2 | 9.7 | 5.22 | 579 | 5.3 |
| 6 | 662 | 31.6 | 13.8 | 6.78 | 668 | 4.7 |
| 7 | 650 | 30.3 | 15.2 | 6 88 | 702 | 3.3 |

### EXAMPLE 12

This example demonstrates the capability of the resin binder extracted from spruce and pine wood (245 deg. C for 3 min) for bonding foundry sands.

60 grams and 40 grams of liquid resin, with a solids content of 50% were mixed respectively with 2 kg of AFS GEN 60 sand. The resin coated sand was then used to produce 6.3 mm thick tensile specimens (dogbones) by heating hand-rammed sand between a pair of hot plates at 260 deg. C for various times to cure and thermoset the resin. All heated solids turned dark brown or black in colour.

Edge retention and surface definition, etc., seemed normal. The percentage of liquid resin curing time and tensile strength were:

| Curing time | Tensile Strength (kPa) | |
|---|---|---|
| (min at 250 C) | 1% resin | 1.5% resin |
| 2 | 525 | 628 |
| 4 | 522 | 676 |
| 8 | 607 | 738 |
| Commercial resin | 700 | |

Strength figures are the average of two tests. These strength properties appear adequate for bonding foundry sands. Test specimens were made three weeks later from the original batch of bagged resin coated sand. Tensile strengths were not changed. This indicates the pre-mixed sand has a long shelf life, provided that it is not allowed to dry out.

The BCIRA Hot Distortion Test determines the distortion of a 100 x 25 x 6.3 mm test specimen held over a flame. The specimen is held fixed at one end, and movement is monitored at the free end. Test specimens prepared three weeks after the resin binder was mixed with sand and cured between 4 and 6 minutes showed slightly more expansion than normal, followed by complete failure after 90 to 120 seconds.

These test results indicate the potential of resin binder extracted from lignocellulose for bonding foundry sand.

## Claims

1. A process for converting lignocellulosic material into a thermoset resin material, comprising:
a) bringing lignocellulosic material in divided form rapidly into contact with high pressure steam at a temperature high enough to decompose and hydrolyze hemicellulose contained in said lignocellulosic material without carbonization thereof;
b) maintaining the lignocellulosic material in contact with high pressure steam for a time sufficient only for the decomposition and hydrolyzation of hemicelluose into low molecular weight, water soluble resin material selected from the group consisting of pentose and hexose sugars, sugar polymers, furfural, dehydrated carbohydrate, organic acids and other similar decomposition products, with negligible degradation of cellulose;
c) separating out the water soluble resin material;
d) bringing the remaining previously hydrolyzed lignocellulosic material in step b) rapidly in contact with high pressure steam for the second time at a temperature high enough to decompose and hydrolyze cellulose without carbonization thereof;
e) maintaining the previously hydrolyzed lignocellulosic material in contact with high pressure steam for a time sufficient for the decomposition and hydrolyzation of the cellulose into low molecular weight, water soluble resin material selected from the group consisting of hexose and pentose sugars, sugar polymers, hydroxymethyl furfural, furfural, organic acids and other decomposition products;
f) separating out the water soluble resin material from the hydrolyzed lignocellulosic material into water soluble resin material and the hydrolyzed lignocellulosic residue;
g) heating and pressing the water soluble material thus produced in step c) and f) in concentrated form against a surface to be adhered thereto, at a temperature, pressure and for a time sufficient to polymerize, crosslink and thermoset this material into a waterproof adhesive bond adhering to the surface.

2. A process for converting hemicellulose of lignocellulosic material into a thermoset, water-proof resin adhesive, comprising;
a) bringing lignocellulosic material, in divided form rapidly into contact with high pressure steam at a temperature in the range of 120 deg. C to 280 deg. C.
b) maintaining the lignocellulosic material in contact with the high pressure steam only for a time sufficient to decompose and hydrolyze hemicellulose into low molecular weight, water soluble resin material selected from the group consisting of pentose and hexose sugars, sugar polymers, dehydrated carbohydrate, furfural, organic acids and other decomposition products, with negligible degradation of cellulose having taken place;
c) heating and pressing the water soluble resin material thus produced in a concentrated form, against a surface to be adhered thereto, at a temperature of at least 160 deg. C and for a sufficient time and pressure to polymerize, crosslink and thermoset this material into a waterproof adhesive bond adhering to the surface.

3. A process for converting cellulose of lignocellulosic material into a thermoset, water-proof resin adhesive, comprising;
a) bringing lignocellulosic material, which has been treated with high pressure steam to decompose and hydrolyze hemicellulose and from which the water soluble resin material has been extracted, rapidly into contact with high pressure steam at a temperature in the range of 120 deg. C to 280 deg.C;
b) maintaining the lignocellulosic material in contact with the high pressure steam for a time sufficient to decompose and hydrolyze cellulose into low molecular weight, water soluble resin material selected from the group consisting of hexose and pentose sugars, sugar polymers, hydroxymethyl furfural, furfural, organic acids and other decomposition products;
c) heating and pressing the water soluble resin material thus produced in a concentrated form, against a surface to be adhered thereto, at a temperature of at least 160 deg. C and for a sufficient time and pressure to polymerize, crosslink and thermoset this material into a water-proof adhesive bond adhering to the surface.

4. A process of converting lignocellulosic material into reconstituted composite products, comprising;
a) bringing lignocellulosic material in divided form rapidly in contact with high pressure steam at a temperature high enough to decompose and hydrolyze hemicellulose without carbonization thereof, for a time sufficient for the decomposition and hydrolyzation of hemicellulose into low molecular weight, water soluble resin material selected from the group consisting of pentose and hexose sugars, sugar polymers, furfural, dehydrated carbohydrate, organic acids and other decomposition products with negligible degradation of cellulose;
b) immediately drying and reducing, by, in either order, the lignocellulosic material into fibre or particulate to a low moisture content;
c) forming the lignocellulosic material alone or in combination with other lignocellulosic material in subdivided form into a mat;
d) pressing the said mat, using heat and pressure to transform the decomposed and hydrolyzed products of hemicellulose to provide a thermoset adhesive bond in situ to yield a reconstituted composite product without charring the mat

5. A process according to claim 1, wherein,
h) the hydrolyzed lignocellulosic material, alone or in combination with other lignocellulosic material, in particle, fibre or flake form, containing the water soluble resin material from steps c) and f) is concentrated, as soon as possible, by being dried to a low moisture content;
i) the dried lignocellulosic material, alone or in combination with other lignocellulosic material is formed into a mat, and then
j) the mat is pressed at a high temperature to avoid charring the mat, at a pressure and for a time sufficient to first polymerize the water soluble resin material into the said crosslinked polymeric substance, and thermoset the thus formed polymeric material into the waterproof adhesive, thereby bonding and bulking "in situ" the lignocellulosic material as the said surface to be adhered to and forming a bonded composite product.

6. A process according to claim 1 wherein, the hydrolyzed lignocellulosic material containing 100% or less of water soluble resin material, in combination with other lignocellulosic material, and in forms of particles, fibres or flakes from steps b) and e) is concentrated, as soon as possible, by being dried to a low moisture content, is formed into a mat, and then the mat is pressed at a temperature in the range of 160 deg. C to 250 deg. C to avoid charring the mat, and at a pressure and time sufficient to first polymerize the low molecular weight water soluble resin material into the said crosslinked, polymeric substance and thermoset the thus formed polymeric substance into the water-proof adhesive, thereby bonding and bulking "in situ" the other components of the lignocellulosic material as the said surface to be adhered to and forming a bonded composite product.

7. A process according to claim 1, wherein the water soluble resin material, which is extracted and eluted with water from the decomposed and hydrolyzed lignocellulosic material, is processed into concentrated form.

8. A process according to claim 1, wherein the water soluble resin material obtained from the decomposition and hydrolyzation of hemicellulose and cellulose of the lignocellulosic material is used separately or mixed together and used as a thermosetting resin adhesive in forms of liquid or solids form.

9. a process according to claim 1, wherein the water soluble resin materials derived from hemicellulose and cellulose of single or mixed species are used separately or in mixture.

10. A process according to claim 1, wherein the divided lignocellulosic material is mixed with an acidic catalyst in an amount of no more than 5% by weight before steam treatment to reduce steam temperature and time and to accelerate the thermal decomposition and hydrolyzation of hemicellulose and cellulose into mater soluble resin material.

11. A process according to claim 1, wherein the water soluble resin materials derived from hemicellulose and cellulose of single or mixed species used separately or in mixture are adjusted to a low pH in order to accelerate the thermoset of the adhesive bond.

12. A process according to claim 1, wherein the water soluble resin material derived from hemicellulose and cellulose, in single or mixed species, are used separately or in mixture to bond lignocellulosic and non-lignocellulosic materials.

13. A process according to claim 1, wherein the lignocellulosic material is derived from forest and agricultural plants of woody or non-woodynature in a single or mixed species and in a form of particle, fiber, flake, chip or in mixture.

14. A process according to claim 1, wherein the lignin of the lignocellulosic material is decomposed and hydrolyzed by the high pressure steam into low molecular weight lignin and lignin products.

15. A process according to claim 1, wherein the water soluble resin material derived from decomposition and hydrolyzation of hemicellulose and cellulose contains a small amount of the low molecular weight lignin and lignin products.
